# EUROPEAN PATENT APPLICATION

(11) **EP 4 265 366 A1**
(43) Date of publication of application: **25.10.2023**
(21) Application number: 21907166.9
(22) Date of filing: 17.12.2021
(51) Int. Cl.: B23K 26/21, C23C 2/28, C23C 2/12, C23C 2/40, B23K 101/18

(54) **METHOD FOR MANUFACTURING TAILOR WELDED BLANK USING STEEL SHEET FOR HOT PRESSING HAVING AL-FE-BASED INTERMETALLIC ALLOY LAYER**

(30) Priority: 18.12.2020 KR 20200179041
(71) Applicant: POSCO Co., Ltd, Pohang-si, Gyeongsangbuk-do 37859 (KR)
(72) Inventor: UHM, Sang-Ho, Incheon 21985 (KR); OH, Jin-Keun, Gwangyang-si, Jeollanam-do 57807 (KR)
(74) Representative: Meissner Bolte Partnerschaft mbB
(86) International application number: PCT/KR2021/019308
(87) International publication number: WO 2022/131862

(57) **Abstract**

An embodiment of the present invention provides a method for manufacturing a tailor welded blank using a steel sheet for hot pressing having an Al-Fe-based intermetallic alloy layer, the method comprising the steps of: preparing a plated steel sheet having a base steel sheet and an aluminum-based plated layer formed on one surface or both surfaces of the base steel sheet; heat-treating the plated steel sheet so that the aluminum-based plated layer becomes an Al-Fe-based intermetallic alloy layer; and subjecting the heat-treated plated steel sheet to butt welding, wherein, before the welding, a part or the entirety of the Al-Fe-based intermetallic alloy layer located in an area to be welded is removed.

## Description

### Technical Field

The present disclosure relates to a method for manufacturing a tailor welded blank using a steel sheet for hot pressing, the steel sheet having an Al-Fe-based intermetallic alloy layer formed thereon.

### Background Art

In order to secure collision safety such as anti-intrusion in the case of a vehicle collision, by having a martensite or bainite-martensite microstructure, a use of a steel material having high mechanical strength by having martensite or bainite-martensite microstructure is required for bumpers, door reinforcements, B-pillar reinforcements, roof reinforcements, or the like.

Patent Document 1 discloses a hot or cold rolled steel plate coated with aluminum or an aluminum alloy. The aluminum or aluminum alloy-coated steel plate is heat treated at Ac1 temperature or higher, and cooled under specific conditions so as to have a tensile strength exceeding 1500 MPa with forming for a component having a required shape. In this case, the coating forms a surface alloy by mutual diffusion between steel and aluminum during heat treatment in a furnace to prevent decarburization and oxidation of metal, and to makes it possible to omit operations such as shot blasting when manufacturing a final component.

Meanwhile, in a heat treatment for manufacturing components using the steel plate coated with aluminum or aluminum alloy, if a heat treatment is not performed under properly designated heating conditions, for example, when rapid heating is applied, problems such as contamination and seizure may occur in transfer equipment, or the like, by melting of aluminum coated on a surface thereof.

In order to solve this problem, rapid heating may be performed, and the performance of the final component is similar to that of a conventional component, but a technique relating to a hot or cold-rolled steel plate having an aluminum plating layer in which a surface plating layer consists only of an intermetallic alloy layer, has been proposed. Thereby, rapid heating is possible when manufacturing components, thereby improving manufacturing productivity and reducing costs.

Meanwhile, in order to reduce the weight of automobiles, components such as blanks subjecting steel materials having different alloy compositions or different thicknesses to butt welding have been developed. Components thus welded are known as "tailor welded blanks" or "tailor welded blanks." As a preferred method for manufacturing such components, laser beam welding has been used, advantageous in terms of process flexibility, quality, and productivity. The manufactured blank may provide a component having mechanical strength, pressing ability and shock absorption that vary within the component itself after being cold pressed. Accordingly, it is possible to provide required properties to appropriate portions without incurring high costs.

An aluminum-coated steel plate composed of only the aluminum-iron intermetallic alloy layer described above is also manufactured as such a tailor welded blank, hot-pressed and quenched with heating, so that it may be provided as a single component having various thicknesses, ideally meeting local load requirements and unique mechanical properties.

However, when the steel plate having a coating layer composed only of the aluminum-iron intermetallic alloy layer is laser-welded, the coating layer is mixed into a molten region formed during welding, and in particular, an Al component promoting formation of ferrite is concentrated according to convection of liquid metal, and a liquid component having the highest concentration during solidification is segregated between dendrites. Therefore, when austenite treatment (heating) is performed for the purpose of quenching the welded blank, the Al-rich region is then transformed into ferrite during cooling. That is, a welded metal portion (molten portion) formed by laser welding has a mixed configuration of martensite having intended high hardness and strength and unintended soft ferrite. As a result, when an external force such as a collision situation is applied during use of the final component, fractures of the weld zone occur, so that the intended function of the component is lost.

Therefore, there is a need for a technique capable of preventing formation of ferrite, which is a source of fracture in welded components.

### [Prior art Document]

### (Patent Document 1) EP 0971044

### Summary of Invention

### Technical Problem

An aspect of the present disclosure is to provide a method for manufacturing a tailor welded blank for hot pressing having an Al-Fe-based intermetallic alloy layer formed thereon.

### Solution to Problem

According to an embodiment of the present disclosure, a method for manufacturing a tailor welded blank using a steel sheet for hot pressing having an Al-Fe-based intermetallic alloy layer formed thereon is provided, the method including operations of: preparing a plated steel sheet having a base steel sheet and an aluminum-based plating layer formed on one surface or both surfaces of the base steel sheet; heat-treating the plated steel sheet so that the aluminum-based plating layer becomes an Al-Fe-based intermetallic alloy layer; and subjecting the heat-treated plated steel sheet to butt welding, wherein, before the welding, a portion or an entirety of the Al-Fe-based intermetallic alloy layer located in a region to be welded is removed.

### Advantageous Effects of Invention

As set forth above, according to an aspect of the present disclosure, a method of manufacturing a tailor welded blank using a steel sheet for hot pressing having an Al-Fe-based intermetallic alloy layer formed thereon may be provided.

### Brief Description of Drawings

FIG. 1 is a schematic view illustrating that an aluminum-based plating layer formed on a base steel sheet becomes an Al-Fe-based intermetallic alloy layer by a heat treatment.
FIG. 2 is a schematic view illustrating that a portion of the Al-Fe-based intermetallic alloy layer formed on the base steel sheet is removed.
FIG. 3 is a schematic view illustrating that a base steel sheet from which a portion of the Al-Fe-based intermetallic alloy layer is removed after butt welding.
FIG. 4 is a photograph of a microstructure of a plated steel sheet having an Al-Fe-based intermetallic alloy layer manufactured according to an embodiment of the present disclosure observed with an optical microscope.

### Best Mode for Invention

Hereinafter, a method for manufacturing a tailor welded blank using a steel sheet for hot pressing, having an Al-Fe-based intermetallic alloy layer formed thereon, according to an embodiment of the present disclosure will be described.

First, a plated steel sheet having a base steel sheet and an aluminum-based plated steel sheet formed on one surface or both surfaces of the base steel sheet is prepared. The plated steel sheet can be obtained through a method of dipping the base steel sheet in an aluminum-based plating bath. In the present disclosure, the type of the base steel sheet is not particularly limited, and all types of steel sheets used in the art can be used. However, preferably, a steel sheet having a high strength of 1500 MPa or more after hot forming may be used. In addition, in the present disclosure, the composition of the aluminum-based plating layer is not particularly limited, and all types of aluminum-based plating layers used in the art can be used. Meanwhile, when the base steel sheet is immersed in an aluminum-based plating bath, an intermetallic compound of several µms is crystallized on a surface of the base steel sheet by a very rapid reaction. However, since these intermetallic compounds are relatively brittle, the aluminum-based plating bath may further include Si as an inhibitor in order to suppress growth of the intermetallic compounds. That is, the aluminum-based plating layer may further include Si, and in this case, a content of Si may be 8 to 12% by weight.

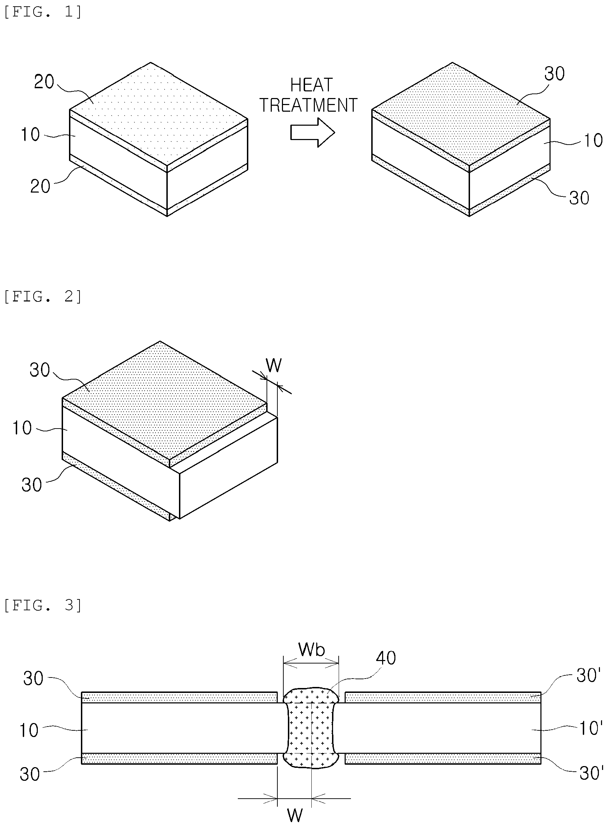

Thereafter, the plated steel sheet is heat treated so that the aluminum-based plating layer becomes an Al-Fe-based intermetallic alloy layer. FIG. 1 is a schematic view illustrating that an aluminum-based plating layer formed on a base steel sheet becomes an Al-Fe-based intermetallic alloy layer by a heat treatment. As illustrated in FIG. 1, an aluminum-based plating layer 20 formed on a base steel sheet 10 is changed into an Al-Fe-based intermetallic alloy layer 30 as Fe diffuses from the base steel sheet by a heat treatment. Meanwhile, the Al-Fe-based intermetallic alloy layer may sometimes be comprised of a first layer and a second layer, wherein the first layer may include at least one of FeAl and Fe3Al, and the second layer may include Fe2Al5. The second layer may exist in a form of a layer or an island. In addition, when Si is included in the aluminum-based plating layer and the Al-Fe-based intermetallic alloy layer also includes Si, the second layer may further include Al2Fe3Si3. The reason why the composition of the first layer and the second layer is different is due to a difference in an amount of Fe diffused from the base steel sheet. That is, the first layer, closer to the base steel sheet has a higher Fe content than the second layer because Fe diffusion occurs more readily therein than the second layer, relatively far from the base steel sheet. The thickness or composition of the first layer and the second layer may vary depending on a heat-treatment temperature and time, but the present disclosure is not particularly limited to specific conditions. However, the temperature during the heat treatment is preferably less than Ac1, but when the temperature during the heat treatment is higher than Ac1, problems may occur in processing in a coil state due to a change in a microstructure of the steel sheet. Meanwhile, the Al-Fe-based intermetallic alloy layer formed through the heat treatment has an advantage of enabling rapid heating during hot forming, which is a post-process, compared to the aluminum-based plating layer formed only by plating without performing a heat treatment. In addition, since in the present disclosure, an Al-Fe-based intermetallic alloy layer is formed by the heat treatment, an overall thickness of the plating layer is increased, so a thickness of the aluminum-based plating layer can be reduced. That is, it is possible to reduce an Al plating amount, and accordingly, it is possible to improve problems such as welding defects, or the like, because an Al content is small compared to an existing Al-Si plating layer. In addition, the intermetallic alloy layer of the existing Al-Si plating layer is FeAl3, and a melting point of FeAl3 is 1160°C, while the first layer of the Al-Fe-based intermetallic alloy layer of the present disclosure is one of FeAl and Fe3Al, and has a higher melting point of 1310°C, so that there is an advantage in that corrosion resistance of a heat-affected zone during welding is more excellent.

FIG. 2 is a schematic diagram illustrating that a portion of regions of an Al-Fe-based intermetallic alloy layer formed on a base steel sheet are removed, and FIG. 3 is a schematic view after butt-welding a base steel sheet from which a portion of regions of an Al-Fe-based intermetallic alloy layer have been removed. As illustrated in FIGS. 2 and 3, in the present disclosure, before the welding, a portion or an entirety of an Al-Fe-based intermetallic alloy layer 30 located in a region to be welded is removed. Thereby, Al included in the Al-Fe-based intermetallic alloy layer is prevented from being mixed into a melting region during welding, so that a microstructure of a final product does not contain ferrite, and thus, high strength can be secured. The Al-Fe-based intermetallic alloy layer is preferably completely removed, but even if the Al-Fe-based intermetallic alloy layer remains through partial removal, it does not significantly affect securing physical properties of the final product. However, after the Al-Fe-based intermetallic alloy layer is partially removed, the remaining Al-Fe-based intermetallic alloy layer preferably has a thickness of 10 µm or less. If the thickness thereof exceeds 10 µm, mechanical properties of a weld zone of the final component after hot forming and quenching may be deteriorated as a large amount of Al component is mixed into the weld metal zone during welding. In the present disclosure, a method of removing the Al-Fe-based intermetallic alloy layer is not particularly limited, and for example, methods such as brushing, grinding, grinding, laser irradiation, chemical solution dipping, and the like, may be used. The removal of the Al-Fe-based intermetallic alloy layer may be performed through a preliminary operation prior to a welding process, or may be performed immediately prior to the welding when performing the welding process. Meanwhile, a width W of the Al-Fe-based intermetallic alloy layer to be removed may be Wb/2 to Wb (mm) . Here, Wb means an average width of a weld metal zone 40 of a tailor welded blank obtained after welding. When the width of the Al-Fe-based intermetallic alloy layer to be removed is smaller than Wb/2, the Al component in the Al-Fe-based intermetallic alloy layer may be mixed into the weld metal zone, and when the width thereof is greater than Wb, corrosion resistance may not be sufficiently secured due to excessive removal of the Al-Fe-based intermetallic alloy layer. In addition, when steel sheets having different thicknesses are welded, melting regions of the steel sheets may be different from each other, and accordingly, widths of the Al-Fe-based intermetallic alloy layers removed from the steel sheets may also be different from each other.

Thereafter, a tailor welded blank may be manufactured by butt-welding the heat-treated plated steel sheet. In the present disclosure, the welding method is not particularly limited, and any method may be used as long as it can meet productivity and quality conditions. For example, laser beam welding, GTAW, plasma welding, GMAW, and the like can be used. According to the present disclosure, as the Al-Fe-based intermetallic alloy layer present in a region to be welded is removed in advance during the welding, since the Al component is not mixed into a molten portion, there is an advantage in that physical properties of a welded metal portion of a final product obtained through hot forming (austenitized heat-treatment, forming/ quenching), which is a post-process, are excellent.

Meanwhile, after the butt welding, a hot press forming process may be additionally performed on the obtained tailor welded blank, and thereby, the obtained final product may be preferably applied to components for automobiles and the like.

### Mode for Invention

Hereinafter, the present invention will be described in more detail through examples. However, the following examples are only examples for explaining the present invention in more detail, and do not limit the scope of the present invention.

### (Example)

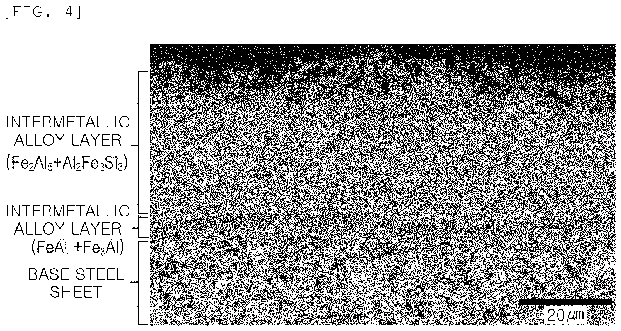

A cold-rolled plated steel sheet was obtained by applying 10% Si-Al plating to 22MnB5 steel, boron steel with a tensile strength of 1500 MPa, which is widely used as a collision member for vehicle bodies. The cold-rolled plated steel sheet was heat-treated at 500° C to form an Al-Fe-based intermetallic alloy layer including FeAl, Fe3Al, Fe2Al5, and Al2Fe3Si3 as illustrated in FIG. 4. In this case, a thickness of the Al-Fe-based intermetallic alloy layer was about 40 µm based on a single side. Thereafter, the cold-rolled plated steel sheet was cut into a rectangular blank having a size of 500 × 120 mm, and then a portion of the Al-Fe-based intermetallic alloy layer was removed by each method described below, and butt welding was performed using laser beam welding to manufacture a tailor welded blank. Thereafter, the tailor welded blank was heated to 920° C, maintained for 4 minutes, and hot forming and quenching were performed. After measuring a tensile strength, elongation, and fracture rate of a weld zone of the tailor welded blank, manufactured as described above, the results thereof were illustrated in Table 1 below. Meanwhile, the manufactured tailor welded blank had an average tensile strength of 1470 MPa in a region corresponding to the base steel sheet.

The tensile strength and elongation were measured by taking a region of the weld zone, 5 tensile test specimens were manufactured according to the KS standard for each, and then measured through a tensile test and expressed as an average value. In this case, a speed of the tensile test was 10 mm/min.

The fracture rate of the weld zone was expressed as a percentage of specimens with fractures as compared to the number of tensile specimens during the tensile test.

In Inventive Example 1, both of both surfaces of an Al-Fe-based intermetallic alloy layer, present in a region to be welded, were removed using a Q-Switch pulse laser, and a removal width of the Al-Fe-based intermetallic alloy layer was 1 mm. Thereafter, butt welding was performed using laser beam welding.

In Inventive Example 2, a portion of both surfaces of an Al-Fe-based intermetallic alloy layer, present in a portion to be welded, were removed using a Q-Switch pulse laser, and a removal width of the Al-Fe-based intermetallic alloy layer was 1 mm, and a remaining thickness thereof was 5 µm. Thereafter, butt welding was performed using laser beam welding.

In Inventive Example 3, both of both surfaces of an Al-Fe-based intermetallic alloy layer, present in a region to be welded were removed, using a grinding facility, and a removal width of the Al-Fe-based intermetallic alloy layer was 1 mm. Thereafter, butt welding was performed using laser beam welding.

In Comparative Example 1, butt welding was performed using laser beam welding without removing an Al-Fe-based intermetallic alloy layer.

During the laser beam welding, a CO2 laser welder having a beam diameter of about 0.4 mm at a focal length was used, 20 liters of He gas was used per minute as a shielding gas, and laser power was set to 6 kW and a welding speed was set to 6 mpm.

**[Table 1]**

| Division | Average tensile strength (MPa) | Average elongation (%) | Fracture rate of weld zone (%) |
|---|---|---|---|
| Inventive Example1 | 1475 | 4 | 0 |
| Inventive Example2 | 1472 | 4 | 0 |
| Inventive Example3 | 1474 | 4 | 0 |
| Comparative Example1 | 1250 | 1.5 | 100 |

As can be seen from Table 1, in the case of Inventive Examples 1 to 3, manufactured to meet the conditions of the present disclosure, a similar level of strength and high elongation to those of the base steel sheet were illustrated. On the other hand, in the case of Inventive Examples, which do not meet the conditions of the present disclosure, it can be seen that both strength and elongation were inferior.

While example embodiments have been shown and described above, it will be apparent to those skilled in the art that modifications and variations could be made without departing from the scope of the present disclosure as defined by the appended claims.

### [Description of Reference Numerals]

10, 10': BASE STEEL SHEET
20: ALUMINUM-BASED PLATING LAYER
30, 30': Al-Fe-BASED INTERMETALLIC ALLOY LAYER
40: WELD METAL PORTION

## Claims

1. A method for manufacturing a tailor welded blank using a steel sheet for hot pressing having an Al-Fe-based intermetallic alloy layer formed thereon is provided, the method including operations of:
preparing a plated steel sheet having a base steel sheet and an aluminum-based plating layer formed on one surface or both surfaces of the base steel sheet;
heat-treating the plated steel sheet so that the aluminum-based plating layer becomes an Al-Fe-based intermetallic alloy layer; and
subjecting the heat-treated plated steel sheet to butt welding,
wherein, before the welding, a portion or an entirety of the Al-Fe-based intermetallic alloy layer located in a region to be welded is removed.

2. The method for manufacturing a tailor welded blank using a steel sheet for hot pressing having an Al-Fe-based intermetallic alloy layer formed thereon of claim 1, wherein the aluminum-based plating layer further comprises Si.

3. The method for manufacturing a tailor welded blank using a steel sheet for hot pressing having an Al-Fe-based intermetallic alloy layer formed thereon of claim 1, wherein the Al-Fe-based intermetallic alloy layer is comprised of a first layer and a second layer,
the first layer including at least one of FeAl and Fe3Al,
the second layer including Fe2Al5.

4. The method for manufacturing a tailor welded blank using a steel sheet for hot pressing having an Al-Fe-based intermetallic alloy layer formed thereon of claim 2, wherein the Al-Fe-based intermetallic alloy layer is comprised of a first layer and a second layer,
the first layer including at least one of FeAl and Fe3Al,
the second layer including at least one of Fe2Al5 and Al2Fe3Si3.

5. The method for manufacturing a tailor welded blank using a steel sheet for hot pressing having an Al-Fe-based intermetallic alloy layer formed thereon of claim 1, wherein a temperature during the heat-treatment is less than Ac1.

6. The method for manufacturing a tailor welded blank using a steel sheet for hot pressing having an Al-Fe-based intermetallic alloy layer formed thereon of claim 1, wherein, after removing a portion of the Al-Fe-based intermetallic alloy layer, a remaining Al-Fe-based intermetallic alloy layer has a thickness of 10 µm or less.

7. The method for manufacturing a tailor welded blank using a steel sheet for hot pressing having an Al-Fe-based intermetallic alloy layer formed thereon of claim 1, wherein a width of the removed Al-Fe-based intermetallic alloy layer is Wb/2 to Wb(mm),
where, Wb refers to an average width of a weld metal zone of the tailor welded blank obtained after welding.

8. The method for manufacturing a tailor welded blank using a steel sheet for hot pressing having an Al-Fe-based intermetallic alloy layer formed thereon of claim 1, wherein, after the butt welding, a hot press forming process is additionally performed.
